# FASCICULE DE BREVET EUROPEEN

(11) **EP 0 826 188 B1**
(45) Date de publication et mention de la délivrance du brevet: **15.12.1999**
(21) Numéro de dépôt: 96916203.1
(22) Date de dépôt: 15.05.1996
(51) Int. Cl.: G06K 7/10, G06K 7/00, G07C 9/00, B65G 1/00

(54) **DISPOSITIF DE COMMUNICATION A DISTANCE ET SON PROCEDE POUR LE SUIVI DE PRODUITS EN MOUVEMENT**
FERNÜBERTRAGUNGSVORRICHTUNG UND VERFAHREN ZUR VERFOLGUNG SICH BEWEGENDER PRODUKTE
REMOTE COMMUNICATION DEVICE AND ASSOCIATED METHOD FOR TRACKING MOVING PRODUCTS

(30) Priorité: 17.05.1995 FR 9506148
(43) Date de publication de la demande: 04.03.1998
(73) Titulaire: Société d'Applications Electroniques et de Télécommunications (S.A.), 13002 Marseille (FR); Stamptronic (S.A.), 06560 Valbonne Sophia Antipolis (FR)
(72) Inventeur: NOUAILHETAS, Yves, F-06560 Valbonne (FR); MERCIER, Joel, F-13006 Marseille (FR)
(74) Mandataire: Hautier, Jean-Louis
(86) Numéro de dépôt international: FR9600731
(87) Numéro de publication internationale: WO9636932

(56) Documents cités:
- EP-A- 0 467 036
- WO-A-93/16531
- US-A- 5 247 164

## Description

La présente invention concerne un dispositif de communication à distance entre un module autonome, associé à un objet dont on veut pouvoir connaître les informations associées (mémoire, capteurs, etc), la position et les déplacements, et une station mobile, appelée opérateur terminal.

L'invention concerne également un procédé de communication qui utilise un tel dispositif.

Cette invention permet de gérer et/ou de contrôler le suivi d'objets en mouvement tels que des conteneurs dans les zones de fret. D'autres utilisations peuvent être envisagées.

De nombreux documents peuvent définir l'état de la technique. Néanmoins les demandes de brevet ci-après sont, de l'avis de la demanderesse, les plus pertinentes sans être toutefois gênantes.

Le document EP-A-0.467.036 propose une identification et un suivi d'articles en fixant des étiquettes émettrices-réceptrices radio à ces articles, qui envoient des signaux entre les étiquettes et un ou plusieurs sous-systèmes d'interrogation. Ces étiquettes sont signalées normalement au moins selon le mode d'attente à faible puissance par un interrogateur. Cet interrogateur radio diffuse un signal à toutes les étiquettes à l'intérieur d'une gamme de réception, et celles-ci répondent après des délais pseudo-aléatoires. Lorsque l'interrogateur a identifié une étiquette, il signale ce fait en acquittant l'étiquette, et celle-ci retourne en mode d'attente. Les étiquettes qui sont identifiées par l'interrogateur retransmettent leurs signaux d'identification, et le procédé continue jusqu'à ce que toutes les étiquettes à l'intérieur de la gamme de l'interrogateur aient été identifiées.

Il est fait état, dans ce document, d'un procédé d'inventaire qui est astucieux mais peu fonctionnel. Entre les messages émis et reçus, des collisions peuvent se produire. Ces risques de collision peuvent devenir quasi permanents si le nombre d'étiquettes est important. De plus, les explications techniques pour la réalisation d'un appareil d'identification permettant la mise en oeuvre du procédé sont insuffisantes. La faisabilité de ce produit et de son algorithme n'est pas avérée. Enfin, le système se limite aux traitements des inventaires, ce qui est un aspect limité des fonctions envisagées par la présente invention.

Le document EP-A-0.441.031 se rapporte à un système destiné à lire ou enregistrer des données dans des étiquettes électroniques pouvant être associées à des objets qui sont mobiles par rapport à un interrogateur, ou qui peuvent être situés à des positions fixes sur le trajet de l'interrogateur mobile. Cet interrogateur, qui est stationnaire si l'étiquette est mobile, envoie un signal fréquence radio continu vers l'étiquette éloignée. Ladite étiquette module par rétrodiffusion le signal fréquence radio reçu avec des données mémorisées en permanence ou temporairement dans l'étiquette, comprenant, par exemple, les données associées à l'objet auquel l'étiquette est attachée, par exemple son identité ou son contenu. Le système de l'invention utilise une technique efficace de codage pour les données qui sont modulées par rétrodiffusion par l'étiquette et reçues par ledit interrogateur. Ces signaux modulés par rétrodiffusion sont composés de signaux de première et seconde fréquences respectivement, où ladite seconde fréquence est deux fois la première fréquence, et où un des deux bits binaires UN et ZERO est représenté par une moitié de période du signal de la première fréquence suivie par une période de la seconde fréquence, et l'autre des deux bits binaires est représenté par une période du signal de la seconde fréquence suivie par une moitié de période du signal de la première fréquence.

L'inconvénient essentiel de ce système réside dans sa directivité et sa faible portée. Au vu des fréquences utilisées et de la technique visée, le système ne permet qu'une identification des étiquettes dans un faisceau précis et avec une portée maximale de dix mètres. De plus, ce type de lecteur consomme beaucoup d'énergie, il est donc d'une construction encombrante et onéreuse (grosse antenne, poids élevé, etc), ce qui nécessite une infrastructure lourde.

Le document US-A-5.247.164 propose une carte à circuit intégré qui fonctionne, pendant la connexion à des moyens de lecture/écriture de la carte, en mode opératoire et en mode veille. La carte comporte une source d'énergie fournissant de l'énergie à ladite carte à circuit intégré et à l'horloge interne.

Là encore, le fonctionnement n'est pas omnidirectionnel. L'application n'est pas non plus identique à celle de l'invention, qui concerne la gestion de stocks. Enfin, le moyen économiseur d'énergie, même s'il joue son rôle, ne permet pas une économie d'énergie optimale.

Le document WO-A-93/16531 a pour objet un système de communication à hyperfréquences entre des répondeurs et une unité centrale. Ce système est principalement caractérisé par une unité de communication permettant d'établir une communication sélective à une distance relativement faible avec les répondeurs et à une distance relativement longue avec l'unité centrale. L'unité de communication comprend également une mémoire destinée au stockage intermédiaire de données.

La présente invention résout les inconvénients développés ci-dessus en proposant un dispositif de communication à distance dont les performances sont accrues (distance de fonctionnement de quelques centaines de mètres, légèreté, directivité ou non, économie, etc.).

Le dispositif d'antenne fonctionne omnidirectionnellement.

Les opérateurs terminaux sont mobiles, légers et économiques, ils peuvent transmettre les informations qu'ils reçoivent à une unité centrale, tel qu'un micro-ordinateur, qui sert à la gestion de l'ensemble.

Ces qualités ont été obtenues en utilisant les fréquences permettant d'adapter la directivité au problème posé, et un moyen économiseur d'énergie, à la fois sur les modules autonomes solidaires des objets à gérer et sur les opérateurs terminaux.

La diminution des dimensions et poids des sources énergétiques a donc rendu les modules et les opérateurs légers et maniables.

A cet effet, la présente invention propose un dispositif de communication à distance avec un module autonome associé à un objet, dont on veut connaître la position et/ou les déplacements, celui-ci comporte, tout d'abord, une unité centrale électronique de gestion des informations provenant d'au moins un opérateur terminal, ensuite au moins un opérateur terminal électronique et mobile pour la recherche, pour l'identification et pour la gestion d'au moins un module autonome, et enfin au moins un module autonome électronique et mobile identifiant l'objet où il est implanté. Ce dispositif est caractérisé par le fait que chaque module autonome et chaque opérateur terminal sont munis de moyens émetteurs/récepteurs qui fonctionnent omnidirectionnellement en ultra hautes fréquences, dites ondes décimétriques.

L'unité centrale est munie de moyens émetteurs/récepteurs qui fonctionnent omnidirectionnellement, en direction du ou des opérateurs terminaux, avec les mêmes fréquences que celui-ci ou ceux-ci.

D'une part, l'ensemble des composants électroniques de chaque module autonome et/ou de chaque opérateur terminal est situé dans un boîtier. D'autre part, le boîtier est un surmoulage qui comporte au moins une antenne.

Chaque module autonome et/ou chaque opérateur terminal comporte(nt) un moyen économiseur d'énergie qui permet d'activer l'ensemble des composants électroniques pendant une certaine durée et à une périodicité donnée. De plus, le moyen économiseur d'énergie est constitué d'une horloge interne au microcontrôleur associée à deux quartz, l'un à faible fréquence et à basse vitesse pour une utilisation du moyen en mode économique, l'autre à plus forte fréquence et à grande vitesse pour une utilisation dudit moyen en mode communication.

Les communications entre les modules, les opérateurs et l'unité centrale sont effectuées de façon hertzienne via des modems, qui comportent des moyens de réglage de leur puissance en fonction de l'utilisation ou de la portée recherchée.

Chaque module autonome comporte une antenne omnidirectionnelle et chaque opérateur terminal comporte une antenne omnidirectionnelle ou une antenne directive associée à un atténuateur.

Selon un mode particulier de réalisation, l'unité centrale est munie d'au moins une liaison filaire en direction du ou des opérateurs terminaux.

Chaque module autonome ou chaque opérateur terminal est un transpondeur qui est constitué par :
- un émetteur/récepteur,
- un microcontrôleur,
- une mémoire morte électriquement effaçable et programmable,
- une source d'énergie, et
- un boîtier de protection.

L'invention a également pour objet un procédé de communication, utilisant un dispositif tel que défini ci-dessus, qui est caractérisé en ce que chaque module autonome a une activité séquentielle et constante qui économise l'énergie dudit module autonome, que chaque opérateur terminal a une activité séquentielle et constante, lors de la recherche et de la communication, ce qui économise l'énergie dudit opérateur terminal, et que l'unité centrale a une activité occasionnelle, selon la nécessité du déchargement des informations stockées au niveau de chaque opérateur terminal ou la volonté des utilisateurs de gérer la position et/ou les déplacements des objets.

Le procédé comporte les étapes successives suivantes :
- un module autonome effectue une veille en écoutant la présence d'une porteuse de l'interrogation par l'intermédiaire d'un réveil cyclique,
- un opérateur terminal émet, pendant un temps suffisamment long, un message d'interrogation destiné à réveiller le module autonome concerné,
- ledit module autonome contrôle si les messages d'interrogation lui sont bien adressés, et
- si c'est le cas, le module autonome effectue la tâche qui lui est demandée et envoie une réponse vers l'opérateur terminal.

La dernière étape du procédé peut également consister en ce que l'ensemble des informations, reçu par l'opérateur terminal, est transmis vers l'unité centrale par voie hertzienne ou filaire.

Le taux de multiplexage, consistant en un rapport entre la durée de fonctionnement en mode communication sur la durée de mise en veille du mode économique, est compris entre 0,001 et 0,1.

Chaque message d'interrogation provenant d'un opérateur terminal est formé de l'adresse module autonome et des informations qui le concernent.

Les dessins ci-joints sont donnés à titre d'exemples indicatifs et non limitatifs. Ils représentent deux modes de réalisation préférés selon l'invention. Ils permettront de comprendre aisément l'invention.

La figure 1 représente une vue générale de l'ensemble des éléments constituant le dispositif de communication, à savoir, un module autonome, appliqué sur un objet devant être géré, un opérateur terminal intermédiaire et une unité centrale de gestion.

La figure 2 représente une vue éclatée des différents composants électroniques constituant un module autonome et/ou un opérateur terminal.

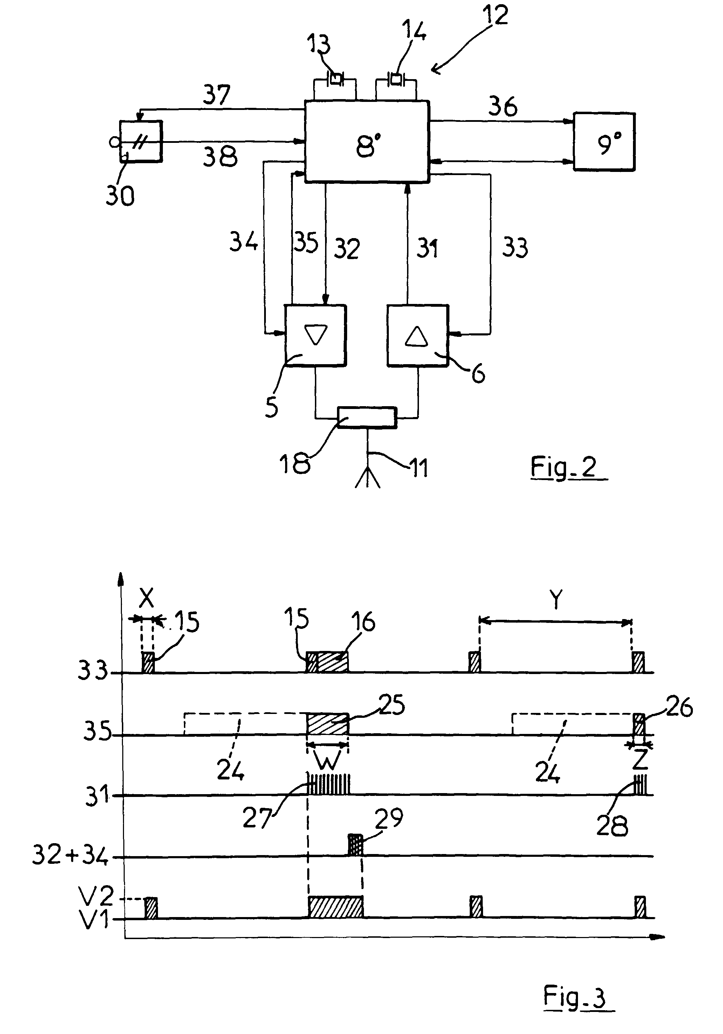

Enfin, la figure 3 représente un chronogramme des alimentations lors du fonctionnement.

La présente invention concerne un dispositif de communication à distance qui comporte essentiellement trois éléments différents.

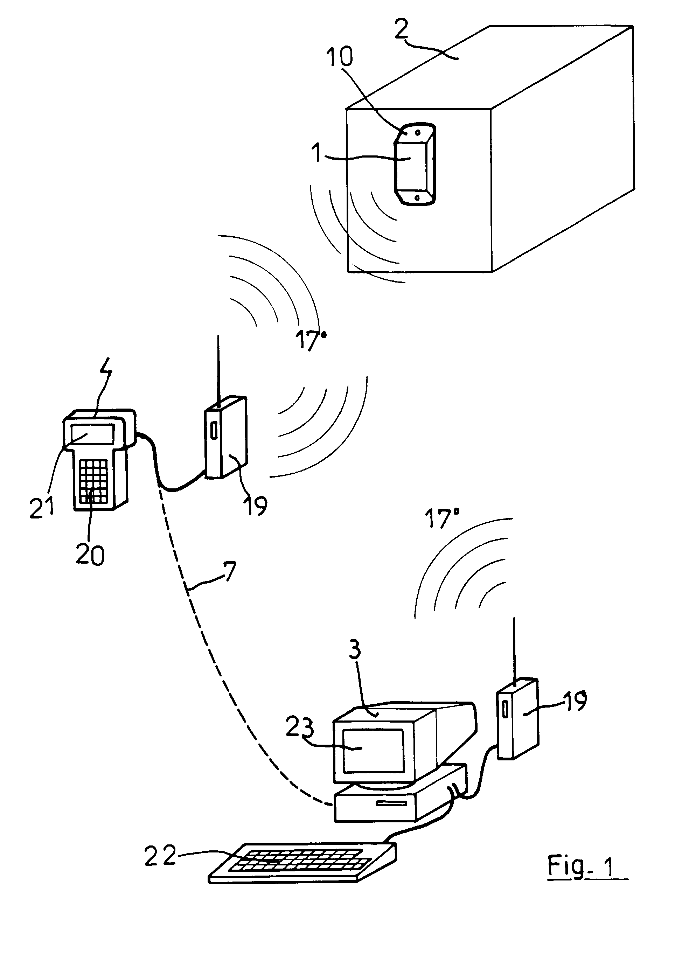

Comme on le voit bien sur la figure 1, les trois éléments communiquent grâce à des ondes hertziennes 17 mais également, dans certains cas, par des liaisons filaires 7.

Le dispositif de communication comporte donc une unité centrale électronique de gestion 3 qui peut être constituée par n'importe quel micro-ordinateur qui va pouvoir gérer l'ensemble des informations qui lui seront transmises.

Le deuxième élément du dispositif consiste en la présence d'au moins un opérateur terminal 4 qui est mobile, c'est-à-dire portable par une personne désirant réaliser la gestion pour un stock d'objet 2 à contrôler.

Cet opérateur terminal 4 permet de rechercher et d'identifier les objets 2.

Pour ce faire, le dispositif comporte un troisième élément qui consiste en un module autonome 1 pour chaque objet 2 dont on veut connaître l'identité, la position, les informations et/ou les déplacements.

En fait, le module autonome 1 est solidaire de l'objet 2.

Il peut être fixé par tout moyen du domaine public à l'extérieur ou à l'intérieur dudit objet 2, par exemple des rivets.

Sur la figure 1, l'objet 2 est constitué par un conteneur sur lequel est riveté le module autonome 1.

En fait, on ne voit du module autonome 1 que le boîtier de protection 10 qui surmoule l'ensemble des composants électroniques y compris les antennes 11.

Dans le cas d'un module autonome 1 fixé à l'intérieur de l'objet ou conteneur 2 en métal, il est nécessaire de pratiquer une fenêtre transparente aux ondes, ou bien de fixer l'antenne à l'extérieur de l'objet 2 et reliée au module 1 par un câble qui traverse la cloison dudit objet 2.

L'ensemble de ces composants électroniques sera plus amplement décrit par la suite.

Ce boîtier 10 est par exemple constitué de polycarbonate. Néanmoins, la fixation peut également être réalisée à l'intérieur de la structure du conteneur 2, ceci afin d'éviter toute dépradation sur lesdits modules 1, soit par mégarde en manipulant les conteneurs 2 les uns par rapport aux autres, soit par un acte de vandalisme.

En fait, le module autonome 1 est destiné à l'identification, la recherche, la localisation ainsi qu'au dialogue longue distance avec lecture et écriture.

L'ensemble de ces fonctions est réalisé entre le module 1 et l'opérateur terminal 4.

Comme on le voit bien sur la figure 2, chaque module autonome 1 et chaque opérateur terminal 4 sont munis de moyens émetteurs 5 et de moyens récepteurs 6 qui fonctionnent omnidirectionnellement en ultra haute fréquence dite onde décimétrique.

Néanmoins, on peut également faire fonctionner l'ensemble en très haute fréquence dite onde métrique. Pour cela, les fréquences utilisées sont comprises entre quelques mégahertz et 1 gigahertz. Néanmoins, pour rester dans les normes qui sont imposées au niveau européen, voire mondial, la fréquence radio est dans la bande normalisée européenne ETSI 300-220.

Les moyens émetteurs 5 et récepteurs 6 comportent soit une seule et même antenne 11, dont l'utilisation nécessite un répartiteur ou circuit de commutation 18, soit deux antennes, afin de simplifier la commutation d'antenne, c'est-à-dire une antenne affectée à l'émission et une antenne affectée à la réception. Ce dernier mode de réalisation n'est pas représenté sur les figures.

Comme on le voit sur la figure 1, l'unité centrale 3 est munie de moyens émetteurs/récepteurs qui fonctionnent omnidirectionnellement en direction du ou des opérateurs terminaux 4 avec les mêmes fréquences que celles énumérées auparavant.

En fait l'opérateur terminal 4 et l'unité centrale 3 comportent des modems 19 pour cette communication hertzienne. On peut néanmoins utiliser une liaison filaire 7, telle que représentée en pointillé sur cette figure 1, pour faire communiquer l'opérateur terminal 4, qui est mobile, avec l'unité centrale 3, qui est fixe.

Selon la figure 2, chaque module autonome 1 ou chaque opérateur terminal 4 est un transpondeur qui est constitué par un émetteur 5/récepteur 6, un microcontrôleur 8, une mémoire morte électronique effaçable et programmable 9, une source d'énergie non représentée sur les figures et un boîtier de protection 10.

En fait, pour que chaque module autonome 1 et chaque opérateur terminal 4 soient petits, économiques et durables, il est nécessaire de limiter la taille des piles au minimum en utilisant un moyen économiseur d'énergie 12 qui permet d'activer l'ensemble des composants électroniques de ces deux éléments 1 et 4 sur une certaine durée et à une périodicité donnée.

Pour cela, on utilise comme moyen économiseur d'énergie 12 une horloge interne au microcontrôleur 8 qui est associée à deux quartz 13 et 14.

Le premier quartz 13 à faible fréquence et à basse vitesse est utilisé en mode économique. Ce mode d'utilisation est en fait le mode courant d'utilisation.

L'autre quartz 14 a une fréquence plus forte et fonctionne à grande vitesse pour une utilisation dudit moyen 12 en mode de communication. Ce mode de communication, bien que consommateur d'énergie, n'est que très rarement utilisé, c'est-à-dire uniquement lorsque la recherche d'un module 1 par un opérateur 4 est effectuée.

Le module autonome 1 est en fait une étiquette électronique de longue portée réinscriptible à grande capacité mémoire qui est spécialement conçue pour résister en milieu très hostile.

L'opérateur terminal qui y est associé est un puissant outil de communication capable de gérer plusieurs modules autonomes 1.

L'opérateur terminal 4 comporte également un clavier 20 ainsi qu'un écran 21.

Le clavier 20 est destiné à écrire un texte qui va s'afficher sur l'écran 21 destiné à être envoyé et inscrit dans la mémoire 9 du module 1 via le modem 19.

Lorsque la recherche sera effectuée, le module autonome 1 va envoyer vers l'opérateur terminal 4, en réponse à un message, l'ensemble des données qui seront inscrites dans sa mémoire 9. La commande d'alimentation électrique de la mémoire 9 est référencée 36.

Ces données vont pouvoir s'afficher sur l'écran 21 de l'opérateur terminal 4 et ainsi permettre à la personne utilisant l'opérateur 4 de connaître les informations qui y sont reportées.

On peut par exemple indiquer la position de stockage du conteneur 2 mais également les marchandises qui sont contenues à l'intérieur dudit conteneur 2.

On peut également prévoir tout autre type d'utilisation.

De la même façon, l'unité centrale 3 comporte un écran 23 et un clavier 22 auxquels sont affectées les mêmes fonctions qu'aux écran 21 et clavier 20.

Ce mode de fonctionnement émetteur/récepteur radio ultra haute fréquence et omnidirectionnel avec moyen économiseur d'énergie 12 permet des performances en distance de communication qui sont très importantes, c'est-à-dire plusieurs centaines de mètres, tout en garantissant une longue durée de vie sans changer les piles, c'est-à-dire plusieurs années.

En champ libre, la distance de communication de la présente invention peut être supérieure à un kilomètre. En champ difficile ou pollué, la distance est de toute façon supérieure à 100 mètres.

En mode omnidirectionnel, il n'est pas nécessaire de passer dans un faisceau qui est en général fixe et nécessite le déplacement desdits objets 2. Néanmoins, la présente invention peut également être utilisée en mode directif, qui permet de reproduire toutes les fonctions des systèmes conventionnels concurrents.

On comprend donc facilement que la présente invention est d'une fonctionnalité bien supérieure à ce qui existait déjà.

En variante, on peut également permettre le suivi des objets 2 par un réseau d'antenne fixe de façon à couvrir un champ plus important.

Les puissances misent en jeu, de l'ordre de 10 milliwatts ne nécessitent pas d'utilisation ou licence. Si la distance ou la portée des dispositifs doit être limitée, comme c'est le cas avec des antennes directives, on peut jouer sur la puissance d'émission et la sensibilité du récepteur.

Un atténuateur peut alors être utilisé devant l'antenne, afin de limiter la distance au champ proche, c'est-à-dire quelques dizaines de mètres.

Les domaines d'application sont très nombreux et peuvent couvrir par exemple la traçabilité des conteneurs dangereux ou frigorifiques ou à forte valeur ajoutée, mais également la traçabilité sécurisée d'objets de valeur dont on veut effectuer une surveillance régulière, mais encore la traçabilité dans le domaine logistique et tout ce qui concerne les marchandises.

Dans un mode de réalisation, le module autonome 1 peut posséder une interface d'acquisition série et parallèle qui lui permet de se connecter à un périphérique quelconque possédant également une liaison série.

Différents types de capteurs 30 et/ou d'actionneurs peuvent également être intégrés et exploités par ledit module 1. Il y a donc nécessité d'avoir une commande d'alimentation 37 et une ligne de transmission 38 des mesures données par le capteur 30.

La nature des interfaces électroniques doit faire l'objet d'une carte d'extension spécifique à inclure dans le module 1. Cette adaptation est fonction de l'application que l'on veut donner audit module 1.

Le concept de cette invention est donc de proposer un module autonome 1 qui est une mémoire électronique fixée sur un container interrogeable à distance par radio fréquence.

Chaque module 1 possède une identité complète du conteneur 2. Ledit module 1 est alors consultable à tout moment et en tout lieu dans un périmètre efficace de quelques dizaines à plus de quatre cents mètres. Ceci est ajustable sur le modem 19.

Le module autonome 1 est exploité à l'aide d'un opérateur terminal 4 fixé sur un véhicule ou porté par un utilisateur.

L'opérateur terminal 4 est entièrement programmable et peut effectuer différentes fonctions, par exemple la liaison réseau avec l'informatique centrale ou local, la liaison radio avec l'ensemble des modules opérateurs 1.

On peut donc réaliser une recherche, une localisation pour une identification physique, l'inventaire physique d'un parc, la vérification physique d'une livraison ou d'un lot de conteneurs 2, la lecture physique des mémoires conteneurs 2 ou l'écriture physique des mémoires conteneurs 2.

Les avantages de ce système sont à chercher dans le suivi physique en temps réel des mouvements avec une possibilité d'obtenir une qualité à zéro défaut.

Le dispositif selon l'invention permet également des dialogues permanents avec le centre de gestion ici constitué par une unité centrale 3.

Ceci permet également une recherche des objets 2 égarés, l'inventaire des parcs ainsi qu'une très grande sécurité quant au déplacement desdits objets 2.

Le dispositif est associé à un procédé de communication qui se résume dans le fait que chaque module autonome 1 a une activité périodique donnée qui permet l'économie d'énergie dudit module autonome 1 et augmente la durée de vie dudit dispositif.

Chaque opérateur terminal 4 a également une activité périodique donnée, ce qui permet également d'économiser l'énergie dudit opérateur terminal 4.

Enfin, l'unité centrale 3 a une activité qui est occasionnelle selon la nécessité de déchargement des informations stockées au niveau de chaque opérateur terminal 4, ou selon la volonté des utilisateurs de gérer la position et/ou les déplacements des objets 2.

Comme on le voit sur la figure 3, un certain nombre de courbes permet de visualiser les différentes périodes d'activité au niveau des éléments électroniques d'un module autonome 1.

Les cinq courbes représentent du haut vers le bas, tout d'abord, la commande d'alimentation de réception 33 présente entre le micro-contrôleur 8 et le moyen récepteur 6, ce qui permet la surveillance de détection d'une porteuse 15 et éventuellement des informations 16 fournies avec l'adresse du module 1. Ensuite, la détection 35 de la porteuse 24 est envoyée par les moyens récepteurs 6 vers le microcontrôleur 8. En fait, l'émission de porteuse 24, issue de l'opérateur 4, induit le fonctionnement 15 et 16 de la courbe d'alimentation du récepteur 33, correspondant à la détection 25 de la porteuse 24. Lorsque la porteuse 24 est détectée 25, et que l'adresse est correcte, la durée de cette détection est égale à W. Si le message reçu comporte une adresse incorrecte, celle-ci est référencée 26 et sa durée Z est inférieure à W qui est la durée de réception des informations 16. Puis il y a la courbe de réception des données 31 entre les moyens récepteurs 6 et le microcontrôleur 8, la durée de décodage du message et donc d'alimentation du récepteur 25 ou 26 dépend du fait que les données 27 reçues par le module 1 comportent une adresse correcte ou que les données 28 du module 1 comportent une adresse incorrecte.

L'avant-dernière ligne concerne la combinaison des deux liaisons filaires qui existe entre le microprocesseur 8 et l'émetteur 5, à savoir d'une part l'émission 32 des informations stockées dans la mémoire 9 du module 1 et d'autre part la commande d'alimentation d'émission 34 du module 1. Cette combinaison n'est effectuée que si l'adresse est correcte et que la demande 27 a été traitée et nécessite une réponse 29.

La dernière courbe montre la vitesse et donc la consommation du module 1 selon les phases de fonctionnement. Lorsque la consommation est égale à V1, le quartz à faible vitesse fonctionne c'est-à-dire que la consommation ne dépasse pas 50 microampères, alors que lorsque l'on fonctionne au niveau de V2, c'est-à-dire en grande vitesse, la consommation est comprise entre 5 et 10 milliampères en réception, et quelques dizaines de milliampères en émission.

Pour en revenir à la première courbe, c'est-à-dire à la commande d'alimentation de réception 33, le taux de multiplexage, consistant en un rapport entre la durée de fonctionnement en mode communication c'est-à-dire X sur la durée de mise en veille du mode économique Y, est compris entre 0,001 et 0,1. C'est ce taux de multiplexage temporel qui définit le niveau de consommation du récepteur, mais aussi le temps de réponse du module 1 à une interrogation.

En effet, une veille radio de 10 millisecondes toutes les secondes demande un temps de réveil de l'ordre de la seconde, alors qu'une veille radio de 10 millisecondes toutes les 100 millisecondes demande 100 millisecondes de temps de réponse, c'est-à-dire la durée totale du cycle de veille, ceci est donc plus rapide.

Chaque message d'interrogation provenant d'un opérateur terminal 4 est formé d'une adresse, qui est toujours prise en compte par les modules autonomes 1, et une information (données de message) qui n'est prise en compte que si l'adresse est correcte.

### REFERENCES

- 1.: Module autonome
- 2.: Objet recevant un module 1
- 3.: Unité centrale électronique de gestion
- 4.: Opérateur terminal
- 5.: Circuit d'émission
- 6.: Circuit de réception
- 7.: Liaison filaire
- 8.: Microcontrôleur
- 9.: Mémoire morte électriquement effaçable et programmable
- 10.: Boîtier de protection
- 11.: Antenne
- 12.: Moyen économiseur d'énergie
- 13.: Quartz à faible fréquence
- 14.: Quartz à grande fréquence
- 15.: Commande d'alimentation du récepteur pour traiter la présence d'une porteuse
- 16.: Réveil et traitement en réception du message
- 17.: Ondes hertziennes
- 18.: Répartiteur ou circuit de commutation d'antenne
- 19.: Modulateur démodulateur dit modem
- 20.: Clavier d'un opérateur 4
- 21.: Ecran d'un opérateur 4
- 22.: Clavier d'une unité 3
- 23.: Ecran d'une unité 3
- 24.: Porteuse envoyée par un opérateur 4
- 25.: Traitement après détection de la porteuse 24 avec l'adresse correcte
- 26.: Détection de la porteuse 24 avec l'adresse incorrecte
- 27.: Réveil et traitement du module 1 lorsque l'adresse est correcte
- 28.: Réveil puis arrêt du module 1 lorsque l'adresse est incorrecte
- 29.: Réponse du module 1 après traitement 27
- 30.: Capteur
- 31.: Données en réception
- 32.: Données en émission
- 33.: Commande d'alimentation du récepteur
- 34.: Commande d'alimentation de l'émetteur
- 35.: Détection de la porteuse 24 et traitement des données
- 36.: Commande d'alimentation de la mémoire
- 37.: Commande d'alimentation de l'interface de télémesure
- 38.: Mesure du capteur 30
- V1.: Faible consommation et basse vitesse
- V2.: Forte consommation et grande vitesse
- W.: Durée de la détection et du traitement 25
- X.: Durée du réveil 15
- Y.: Durée entre deux réveils 15
- Z.: Durée du traitement de la détection de la porteuse 26

## Revendications

1. Dispositif de communication à distance avec un module autonome (1) associé à un objet (2), dont on veut connaître la position et/ou les déplacements, celui-ci comporte :
- une unité centrale électronique de gestion (3) des informations provenant d'au moins un opérateur terminal (4),
- au moins un opérateur terminal (4) électronique et mobile pour la recherche, pour l'identification et pour la gestion d'au moins un module autonome (1) par le biais de messages d'interrogation,
- au moins un module autonome (1) électronique et mobile identifiant l'objet (2) où il est implanté, et
- chaque module autonome (1) et/ou chaque opérateur terminal (4) comporte(nt) un moyen économiseur d'énergie (12),
caractérisé par le fait
- que chaque module autonome (1) et chaque opérateur terminal (4) sont munis de moyens émetteurs (5)/récepteurs (6) qui fonctionnent omnidirectionnellement en ultra hautes fréquences, dites ondes décimétriques,
- que le moyen économiseur d'énergie (12) permet d'activer les moyens récepteurs (6) pendant seulement une certaine durée et à une périodicité donnée, et
- que le moyen économiseur d'énergie (12) permet de ne maintenir activés les moyens récepteur (6) à réception d'un message d'interrogation que si l'adresse du message d'interrogation est correcte.

2. Dispositif, selon la revendication 1, caractérisé par le fait
que l'unité centrale (3) est munie de moyens émetteurs/récepteurs qui fonctionnent omnidirectionnellement, en direction du ou des opérateurs terminaux (4), avec les mêmes fréquences que celui-ci ou ceux-ci.

3. Dispositif, selon l'une quelconque des revendications 1 ou 2, caractérisé par le fait
que l'ensemble des composants électroniques de chaque module autonome (1) et/ou de chaque opérateur terminal (4) est situé dans un boîtier (10), et
que le boîtier (10) est un surmoulage qui comporte au moins une antenne (11).

4. Dispositif, selon l'une quelconque des revendications 1 ou 2, caractérisé par le fait
que les communications entre les modules (1), les opérateurs (4) et l'unité centrale (3) sont effectuées de façon hertzienne via des modems (19), qui comportent des moyens de réglage de leur puissance en fonction de l'utilisation ou de la portée recherchée.

5. Dispositif, selon la revendication 3, caractérisé par le fait
que chaque module autonome (1) comporte une antenne (11) omnidirectionnelle, et
que chaque opérateur terminal (4) comporte une antenne omnidirectionnelle ou une antenne directive associée à un atténuateur.

6. Dispositif, selon l'une quelconque des revendications 1 à 5, caractérisé par le fait
que le moyen économiseur d'énergie (12) permet de n'activer les moyens émetteurs que si le message d'interrogation reçu comporte une adresse correcte et qu'il a été traité et nécessite une réponse.

7. Dispositif, selon l'une quelconque des revendications 1 à 6, caractérisé par le fait
que le moyen économiseur d'énergie (12) est constitué d'une horloge interne au microcontrôleur (8) associée à deux quartz (13 et 14), l'un (13) à faible fréquence et à basse vitesse pour une utilisation des moyens économiseurs d'énergie (12) en mode économique, l'autre (14) à plus forte fréquence et à grande vitesse pour une utilisation dudit moyen économiseur d'énergie (12) en mode communication.

8. Procédé de communication, utilisant un dispositif selon l'une quelconque des revendications 1 à 7, caractérisé en ce
que chaque module autonome (1) a une activité séquentielle et constante qui économise l'énergie dudit module autonome (1),
que chaque opérateur terminal (4) a une activité séquentielle et constante, lors de la recherche et de la communication, ce qui économise l'énergie dudit opérateur terminal (4), et
que l'unité centrale (3) a une activité occasionnelle, selon la nécessité du déchargement des informations stockées au niveau de chaque opérateur terminal (4) ou la volonté des utilisateurs de gérer la position et/ou les déplacements des objets (2).

9. Procédé de communication, selon la revendication 8, caractérisé en ce
qu'il comporte les étapes successives suivantes :
- un module autonome (1) effectue une veille en écoutant la présence d'une porteuse de l'interrogation par l'intermédiaire d'un réveil cyclique,
- un opérateur terminal (4) émet, pendant un temps suffisamment long, un court message d'interrogation, destiné à réveiller le module autonome (1) concerné,
- ledit module autonome (1) contrôle si les messages d'interrogation lui sont bien adressés, et
- si c'est le cas, le module autonome (1) effectue la tâche qui lui est demandée et envoie une réponse vers l'opérateur terminal (4) .

10. Procédé, selon la revendication 9, caractérisé en ce
que la dernière étape consiste en la transmission de l'ensemble des informations, reçu par l'opérateur terminal (4), vers l'unité centrale (3) par voie hertzienne (17) ou filaire (7).

11. Procédé, selon l'une quelconque des revendications 8 ou 9, caractérisé en ce
que le taux de multiplexage, consistant en un rapport entre la durée de fonctionnement en mode communication (X) sur la durée de mise en veille du mode économique (Y), est compris entre 0,001 et 0,1.

12. Procédé, selon la revendication 9, caractérisé en ce
que chaque message d'interrogation provenant d'un opérateur terminal (4) est formé de l'adresse d'un module autonome (1) et des informations qui le concernent.

## Patentansprüche

1. Fernübertragungseinrichtung mit einem autonomen Modul (1), das einem Objekt (2) beigeordnet ist, dessen Position und/oder Bewegungen erkannt werden sollen, bestehend aus:
- einer elektronischen Zentraleinheit (3) zur Verarbeitung der von mindestens einem Terminal (4) kommenden Informationen,
- mindestens einem elektronischen und mobilen Terminal (4) zur Suche, Identifizierung und Steuerung von mindestens einem autonomen Modul (1) über Abfragemeldungen,
- mindestens einem elektronischen und mobilen autonomen Modul (1), welches das Objekt (2), an dem es angebracht ist, identifiziert, und
- auf jedem autonomen Modul (1) und/oder jedem Terminal (4) vorgesehenen Energiesparmitteln (12);
dadurch gekennzeichnet,
- daß jedes autonome Modul (1) und jedes Terminal mit Sende- (5) und Empfangsmitteln (6) ausgerüstet ist, welche omnidirektional mit Ultrahochfrequenzen, genannt Dezimeterwellen, arbeiten,
- daß das Energiesparmittel (12) erlaubt die Empfangsmittel (6) nur für eine bestimmte Dauer und in festgelegten Zeitabschnitten zu aktivieren, und
- daß das Energiesparmittel (12) erlaubt die Empfangsmittel (6)am Empfang einer Abfragemeldung in Aktivität zu halten nur wenn die Adresse der Abfragemeldung korrekt ist.

2. Einrichtung gemäß Anspruch 1, dadurch gekennzeichnet,
daß die Zentraleinheit (3) mit Sende-/Empfangsmitteln ausgerüstet ist, die omnidirektional in Richtung des bzw. der Terminals (4) auf deren Frequenzen arbeiten.

3. Einrichtung gemäß irgendeinem der Ansprüche 1 oder 2, dadurch gekennzeichnet,
daß die Gesamtheit der elektronischen Komponenten jedes autonomen Moduls (1) und/oder jedes Terminals (4) in ein Gehäuse (10) eingebettet ist, und
daß das Gehäuse (10) übergegossen ist und mindestens eine Antenne (11) aufweist.

4. Einrichtung gemäß irgendeinem der Ansprüche 1 oder 2, dadurch gekennzeichnet,
daß der Informationsfluß zwischen den Modulen (1), den Terminals (4) und der Zentraleinheit (3) im Funk über Modems (19) erfolgt, welche Mittel zur Regulierung ihrer Leistung entsprechend der Verwendung oder der gewünschten Tragweite beinhalten.

5. Einrichtung gemäß Anspruch 3, dadurch gekennzeichnet,
daß jedes autonome Modul (1) eine Allrichtungsantenne (11) aufweist, und
daß jedes Terminal (4) eine Allrichtungsantenne oder eine mit einem Abschwächer ausgestattete Richtungsantenne aufweist

6. Übertragungsverfahren zur Verwendung einer Einrichtung gemäß irgendeinem der Ansprüche 1 bis 5, dadurch gekennzeichnet,
daß das Energiesparmittel (12) erlaubt die Empfangsmittel (6) zu aktivieren nur wenn die kommende Abfragemeldung eine korrekte Adresse besteht und daß die verarbeitet gewesen ist und eine Antwort erfordet.

7. Übertragungsverfahren zur Verwendung einer Einrichtung gemäß irgendeinem der Ansprüche 1 bis 6, dadurch gekennzeichnet,
daß das Energiesparmittel (12) aus einem dem Mikroprozessor (8) internen Zeitzähler und zwei Quarzen (13 und 14) gebildet wird, wobei der eine Quarz (13) mit niedriger Frequenz und langsamem Takt für den Betrieb des Energiesparmittels (12) in Sparmodus und der andere Quarz (14) mit höherer Frequenz und schnellem Takt für einen Betrieb des besagten Energiesparmittels (12) in Kommunikationsmodus vorgesehen ist.

8. Übertragungsverfahren zur Verwendung einer Einrichtung gemäß irgendeinem der Ansprüche 1 bis 7, dadurch gekennzeichnet,
daß jedes autonome Modul (1) eine sequentielle und konstante Aktivität hat, welche die Energie des besagten autonomen Moduls (1) spart,
jedes Terminal (4) bei der Suche und der Übertragung eine sequentielle und konstante Aktivität hat, wodurch die Energie des besagten Terminals (4) eingespart wird, und
die Zentraleinheit (3) eine gelegentlich vorkommende Aktivität hat, je nach Erfordernis der Übertragung der in jedem Terminal (4) gespeicherten Informationen oder nach Belieben der Benutzer zur Verwaltung der Position und/oder den Bewegungen der Objekte (2).

9. Übertragungsverfahren gemäß die Ansprüche 8 dadurch gekennzeichnet,
daß es die nachstehend genannten, aufeinander folgenden Schritte umfaßt:
- ein autonomes Modul (1) ist in Bereitschaft zum Ansprechen auf eine Abfrage-Trägerfrequenz mittels eines zyklischen Anregers,
- ein Terminal (4) sendet über eine ausreichend lange Zeit eine kurze Abfragemeldung, dazu bestimmt, das betroffene autonome Modul (1) anzuregen.
- das besagte autonome Modul (1) überprüft ob ihm die Abfragemeldungen bestimmt sind, und
- wenn dies der Fall ist, erledigt das autonome Modul (1) die ihm gestellte Aufgabe und sendet eine Antwort an das Terminal (4).

10. Verfahren gemäß den Anspruch 9, dadurch gegenzeichnet
daß der letzte Schritt in der Übertragung auf dem Funkweg (17) oder über Leitung (7) der gesamten vom Terminal (4) erhaltenen Informationen an die Zentraleinheit (3) besteht.

11. Verfahren gemäß irgendeinem der Ansprüche 8 oder 9, dadurch gekennzeichnet,
daß die Multiplexrate, beruhend auf dem Verhältnis zwischen der Betriebsdauer im Übertragungsmodus (X) und der Dauer der Bereitschaftsstellung in Sparmodus (Y), zwischen den Werten 0,001 und 0,1 liegt.

12. Verfahren gemäß Anspruch 9, dadurch gekennzeichnet,
daß jede von einem Terminal (4) kommende Abfragemeldung aus der Adresse eines autonomen Moduls (1) und den das selbe betreffenden Informationen besteht.

## Claims

1. Device for remote communications with a self-contained module (1) associated with an object (2), the position and/or the movement of which it is required to know, comprising:
- a central electronic unit (3) for management of data from at least one terminal operator (4),
- at least one electronic and mobile terminal operator (4) for the search, identification and management of at least one self-contained module (1) through interrogation messages,
- at least one electronic and mobile self-contained module (1) identifying the object (2) where it is located, and,
- energy saving means (12) included in each self-contained module (1) and/or each terminal operator (4)
characterized in that
- each self-contained module (1) and each operator terminal (4) are equipped with transmitter (5) / receiver (6) means which operate omnidirectionally at ultra-high frequencies, so-called decimetric waves,
- that the energy saving means (12) can activate reception means (6) only for a certain period of time and at a given periodicity and
- that the energy saving means (12) can keep on activating reception means (6) on receipt of an interrogation message only if the address of the interrogation message is correct.

2. Device according to claim 1, characterized in
that the central unit (3) is equipped with transmitter/receiver means which operate omnidirectionally, in the direction of the terminal operator(s) (4), with the same frequencies.

3. Device according to any one of claims 1 or 2, characterized in
- that all the electronic components on each self-contained module (1) and/or each terminal operator (4) are located in a housing (10), and
- that the housing (10) is moulded onto the components with at least one antenna (11).

4. Device according to any one of claims 1 or 2, characterized in
that communications between the modules (1), the operators (4) and the central unit (3) are made by wireless means through modems (19), which include means for adjusting their power according to the use or the range desired.

5. Device according to claim 3, characterized in
that each self-contained module (1) has an omnidirectional antenna (11), and
that each terminal operator (4) has an omnidirectional antenna or a directive antenna associated with an attenuator.

6. Device according to any one of claims 1 to 5, characterized in
that the energy saving means (12) can activate reception means (6) only if the received interrogation message has a correct address and has been processed and needs an answer.

7. Device according to any one of claims 1 to 6, characterized in
that the energy saving means (12) is formed by a clock internal to the micro-controller (8) associated with two crystals (13 and 14), one of which (13) operating at low frequency and low rate for utilisation of the energy saving means (12) in economic mode, the other (14) operating at higher frequency and higher rate for use of the said energy saving means (12) in communication mode.

8. Communication method, using a system according to any one of claims 1 to 7, characterized in
that each self-contained module (1) has sequential and constant activity which economizes the energy of the said self-contained module (1),
that each terminal operator (4) has a sequential and constant activity, during the search and communication, which economizes the energy of the said terminal operator (4), and
that each central unit (3) has an occasional activity according to the need to download the data stored in each terminal operator (4) or the desire of users to manage the position and/or the movement of objects (2).

9. Communication method according to claim 8, characterized in
that it contains the following successive stages:
- a self-contained module (1) effects a standby function by listening to the presence of the interrogation carrier wave through a cyclic activation,
- a terminal operator (4) issues a short interrogation message for a sufficiently long period of time to activate the self-contained module (1) involved,
- said self-contained module (1) checks whether the interrogation messages are addressed to it, and,
- if this is the case, the self-contained module (1) carries out the tasks which are requested of it and then dispatches a response to the terminal operator (4).

10. Method according to claim 9, characterized in
that the last stage consists in transmitting all the data received by the terminal operator (4) to the central unit (3) by wireless (17) or wire channel (7).

11. Method according to any one of claims 8 or 9, characterized in
that the multiplexing rate, consisting in a ratio between the duration of operation in communication mode (X) and the duration of standby in economic mode (Y), is between 0.001 and 0.1.

12. Method according to claim 9, characterized in
that each interrogation message issued by a terminal operator (4) is formed of the address of a self-contained module (1) and the data which concerns it.
